# EUROPEAN PATENT APPLICATION

(11) **EP 4 764 656 A1**
(43) Date of publication of application: **24.06.2026**
(21) Application number: 24857924.5
(22) Date of filing: 06.06.2024
(51) Int. Cl.: G02B 27/01, G02B 17/08

(54) **OPTICAL MODULE CAPABLE OF ELIMINATING STRAY LIGHT AND NEAR-EYE DISPLAY DEVICE**

(30) Priority: 30.08.2023 CN 202322356240 U
(71) Applicant: Hangzhou Lingban Technology Co., Ltd., Hangzhou, Zhejiang 310000 (CN)
(72) Inventor: XIA, Jie, Hangzhou, Zhejiang 310000 (CN); CHEN, Pengbo, Hangzhou, Zhejiang 310000 (CN); DU, Hui, Hangzhou, Zhejiang 310000 (CN); JIANG, Chaoqun, Hangzhou, Zhejiang 310000 (CN)
(74) Representative: Huang, Liwei
(86) International application number: PCT/CN2024/097659
(87) International publication number: WO 2025/044379

(57) **Abstract**

Disclosed are an optical module capable of eliminating stray light and a near-eye display device. The optical module capable of eliminating stray light includes an image display unit (1), configured to emit image light; a first reflection unit (2), including a first prism and configured to reflect the image light to a first polarization unit (21); the first polarization unit (21), located between the first prism and a first imaging prism unit (3), and configured to reflect image light in a first polarization transmission direction and transmit image light in a second polarization transmission direction; a second reflection unit (4), including at least one lens and provided with a transflective film on a side thereof away from the first prism; and the first imaging prism unit (3), including a second prism and a second polarization unit (31), where the second polarization unit (31) is attached to the second prism and arranged close to a human eye, and is configured to transmit light parallel to a third polarization transmission direction and reflect light perpendicular to the third polarization transmission direction. Halo, glare, eye fatigue, and discomfort caused by interference and light pollution resulting from cheek reflection can be avoided, thereby improving user experience and comfort.

## Description

### CROSS-REFERENCES TO RELATED APPLICATIONS

This application claims priority to Chinese Patent Application No. 202322356240.2, filed with the China National Intellectual Property Administration on August 30, 2023, which is incorporated herein by reference in its entirety.

### TECHNICAL FIELD

This application pertains to the field of optical technologies, and in particular, to an optical module capable of eliminating stray light and a near-eye display device.

### BACKGROUND

As AR products are increasingly widely used in augmented reality, and corresponding technologies are constantly being developed, AR products are increasingly valued by people, and are next-generation mobile terminals that are expected to take the place of mobile phones. Particularly, in recent years, augmented reality (Augmented Reality, AR) technologies have been applied and rapidly developed in intelligent wearable devices. A core component of the augmented reality technologies is an optical module. A field of view (FOV), a thickness, and a display effect of the optical module directly determine quality of the intelligent wearable devices. Still providing excellent image quality while achieving a large FOV and lightening and thinning has become a key to the development of the AR technologies.

Among current augmented reality (Augmented Reality, AR)/virtual reality (Virtual Reality, VR)/mixed reality (Mixed Reality, MR) solutions, both Birdbath solutions and Pancake solutions involve multiple reflections and consequently a high risk of stray light. During use by a user, a lens on an eye side reflects light onto the user's cheek, compromising use experience. This is particularly evident in AR devices with non-fully closed display and bright ambient light. Cheek reflection refers to the phenomenon that light from a display in an AR device or ambient light is incident on a user's cheek, and due to reversibility of an optical path, the light is reflected from the cheek back to the display along the optical path, resulting in interference and light pollution. Such reflection causes problems such as halo and glare in images seen by a user, affecting the user's perception and cognition of a virtual image. In addition, when a user uses an AR device for a long time, interference and light pollution caused by cheek reflection may further cause eye fatigue and discomfort, affecting user experience and comfort.

### SUMMARY

This application is intended to solve the foregoing problems by proposing an optical module capable of eliminating stray light and a near-eye display device. In this way, issues of halo, glare, eye fatigue, and discomfort caused by interference and light pollution resulting from cheek reflection can be avoided, thereby improving user experience and comfort.

To achieve the foregoing objective, this application uses the following technical solutions:

An optical module capable of eliminating stray light proposed by this application includes an image display unit, a first reflection unit, a first polarization unit, a second reflection unit, and a first imaging prism unit, where:
the image display unit is configured to emit image light;
the first reflection unit includes a first prism and is configured to reflect the image light to the first polarization unit;
the first polarization unit is located between the first prism and the first imaging prism unit, and is configured to reflect image light in a first polarization transmission direction to the second reflection unit and transmit image light in a second polarization transmission direction, where the first polarization transmission direction is 90° to the second polarization transmission direction, and the first polarization transmission direction is the same as a polarization transmission direction of the image display unit;
the second reflection unit includes at least one lens, and a transflective film is provided on a side of the lens away from the first prism, wherein the transflective film is configured to reflect the image light in the first polarization transmission direction so that the reflected image light passes through the first reflection unit and the first imaging prism unit successively to enter a human eye, and the transflective film is configured to transmit light from a real scene, so that the light from the real scene passes through the first reflection unit and the first imaging prism unit successively to enter the human eye; and
the first imaging prism unit includes a second prism and a second polarization unit, where the second polarization unit is attached to the second prism and arranged close to the human eye, and is configured to transmit light parallel to a third polarization transmission direction and reflect light perpendicular to the third polarization transmission direction; and the third polarization transmission direction is the same as the second polarization transmission direction.

Preferably, the first polarization unit includes a first linear polarizer, a polarizing reflector plate, and a quarter-wave plate that are successively arranged along a direction from the second prism to the first prism.

Preferably, the image display unit is further provided with a third polarization unit, and the third polarization unit is configured to convert the image light into 45° linearly polarized light.

Preferably, the second polarization unit includes a second linear polarizer, and the third polarization unit includes a third linear polarizer.

Preferably, the 45° linearly polarized light undergoes a first reflection on a side of the first prism close to the second reflection unit to form first light, the first light undergoes a second reflection on the first polarization unit to form second light, the second light undergoes a third reflection on the transflective film to form third light, the third light is converted by the first polarization unit into fourth light and subsequently transmitted through the second polarization unit to enter the human eye, the first light is 45° linearly polarized light, the second light is left-handed circularly polarized light, the third light is right-handed circularly polarized light, the fourth light is -45° linearly polarized light, and the second polarization unit is configured to transmit the -45° linearly polarized light and reflect the 45° linearly polarized light.

Preferably, the second reflection unit is a curved lens, and one side thereof close to the first prism is a planar surface, and one side thereof away from the first prism is a convex surface.

Preferably, the image display unit moves relative to the first reflection unit to perform diopter adjustment.

Preferably, the optical module capable of eliminating stray light further includes a first imaging lens unit, where the first imaging lens unit is located on a light-emitting side of the image display unit and includes at least one lens.

Preferably, the first imaging lens unit and the image display unit move synchronously relative to the first reflection unit to perform diopter adjustment.

A near-eye display device includes the optical module capable of eliminating stray light according to any one of the foregoing technical solutions.

Compared with a conventional technology, this application brings the following beneficial effects:

In the conventional technology, a lens on a side close to a human eye inevitably reflects light, leading to cheek reflection and consequently causing stray light and ghosting. In this application, the second polarization unit is added to the side close to the human eye, and the second polarization unit transmits all light parallel to a third polarization transmission direction, and reflects all light perpendicular to the third polarization transmission direction, thereby some external stray light can be blocked, and some external stray light can be masked by the image light emitted by the image display unit. This solves problems of stray light and ghosting occurring in an image, and avoids issues of halo, glare, eye fatigue, and discomfort caused by interference and light pollution resulting from cheek reflection without affecting a user's perception and cognition of a virtual image, thereby improving user experience and comfort. In addition, by folding an optical path multiple times (three reflections), a field of view is expanded, and implementation of lightening and thinning is facilitated.

### BRIEF DESCRIPTION OF DRAWINGS

FIG. 1 is a schematic diagram of a structure of an optical module capable of eliminating stray light according to this application;
FIG. 2 is a diagram of a principle of cheek reflection of an optical module capable of eliminating stray light according to this application; and
FIG. 3 is a schematic diagram of a composition of each polarization unit of an optical module capable of eliminating stray light according to this application.
Description of reference numerals: 1. image display unit; 2. first reflection unit; 3. first imaging prism unit; 4. second reflection unit; 5. first imaging lens unit; 6. human eye; 11. third polarization unit; 21. first polarization unit; 31. second polarization unit; 211. first linear polarizer; 212. polarizing reflector plate; 213. quarter-wave plate.

### DESCRIPTION OF EMBODIMENTS

Technical solutions in embodiments of this application are clearly and comprehensively described below with reference to the accompanying drawings in the embodiments of this application. Clearly, the described embodiments are merely some rather than all of the embodiments of this application. Based on the embodiments of this application, all other embodiments obtained by a person of ordinary skill in the art without creative efforts shall fall within the protection scope of this application.

It should be noted that, unless otherwise defined, all technical and scientific terms used in this specification have same meanings as those usually understood by a person skilled in the art of this application. Terms used in this specification of this application are merely intended to describe some specific embodiments, but not to limit this application.

Cheek reflection affects image quality and user experience of an AR device. To reduce such impact, the design and user experience of the AR device need to be optimized.

Embodiment 1:

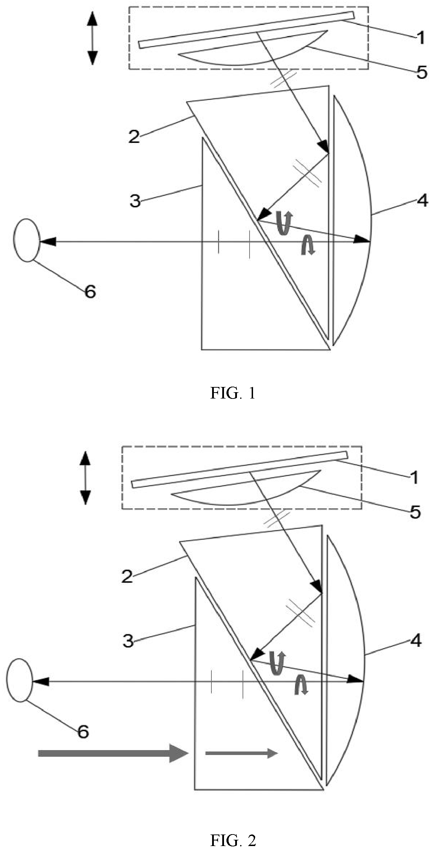

As shown in FIG. 1 to FIG. 3, an optical module capable of eliminating stray light includes an image display unit 1, a first reflection unit 2, a first polarization unit 21, a second reflection unit 4, and a first imaging prism unit 3, where:
the image display unit 1 is configured to emit image light;
the first reflection unit 2 includes a first prism and is configured to reflect the image light to the first polarization unit 21;
the first polarization unit 21 is located between the first prism and the first imaging prism unit 3, and is configured to reflect image light in a first polarization transmission direction to the second reflection unit 4 and transmit image light in a second polarization transmission direction, where the first polarization transmission direction is 90° to the second polarization transmission direction, and the first polarization transmission direction is the same as a polarization transmission direction of the image display unit;
the second reflection unit 4 includes at least one lens, and a transflective film is provided on a side of the lens away from the first prism, wherein the transflective film is configured to reflect the image light in the first polarization transmission direction so that the reflected image light passes through the first reflection unit 2 and the first imaging prism unit 3 successively to enter a human eye 6, and the transflective film is configured to transmit light from a real scene, so that the light from the real scene passes through the first reflection unit 2 and the first imaging prism unit 3 successively to enter the human eye 6; and
the first imaging prism unit 3 includes a second prism and a second polarization unit 31, where the second polarization unit 31 is attached to the second prism and arranged close to the human eye 6, and is configured to transmit light parallel to a third polarization transmission direction and reflect light perpendicular to the third polarization transmission direction; and the third polarization transmission direction is the same as the second polarization transmission direction.

The image display unit 1 is configured to emit image light, and for example, is one of an organic light-emitting diode (Organic Light-Emitting Diode, OLED) display, a liquid crystal on silicon (Liquid Crystal On Silicon, LCOS) display, a micro light-emitting diode (Micro Light-Emitting Diode, Micro LED) display, a digital light processing (Digital Light Processing, DLP) display, or a laser beam scanning (Laser Beam Scanning, LBS) display, and is preferably an OLED display. In addition, the image display unit 1 includes but is not limited to the foregoing devices. The first prism and the second prism may have any shape, and may be preferably a triangular prism. For example, the second prism is a right-angle prism, has a first right-angle optical surface, a second right-angle optical surface, and a tilted optical surface. In addition, the first right-angle optical surface of the second prism is disposed vertically close to the human eye 6, the second right-angle optical surface is disposed horizontally, and the tilted optical surface is disposed facing the first reflection unit 2. The first prism is a triangular prism, and has a first optical surface, a second optical surface, and a third optical surface. The first optical surface is tilted toward the image display unit 1, the second optical surface is vertically disposed close to the second reflection unit 4, and the third optical surface and the tilted optical surface of the second prism are parallel to each other.

The second reflection unit 4 is a lens group that has functions of aberration correction and optical path reflection. The lens group may be made of a glass material or a plastic material, and includes but is not limited to the following types: a spherical lens, an aspherical lens, a free-form lens, a Fresnel lens, a flat lens, and the like. The spherical lens is preferred. The transflective film may be implemented in a film plating manner or a film attachment manner.

The first reflection unit 2 is configured to reflect the image light to the first polarization unit 21, and employs a principle of total internal reflection. The first polarization unit 21 is configured to reflect image light in a first polarization transmission direction and transmit image light in a second polarization transmission direction. For example, the first polarization transmission direction is 45°, and the second polarization transmission direction is -45°. The image light reflected by the first polarization unit 21 is further reflected by the second reflection unit 4, is then transmitted through the first reflection unit 2 to reach the first polarization unit 21, and enters the human eye 6 after being converted by the first polarization unit 21.

In a conventional technology, a lens on a side close to a human eye inevitably reflects light, leading to cheek reflection (as shown in FIG. 2, a thick horizontal arrow pointing to the right indicates external stray light entering the second prism, and a thin arrow indicates filtered external stray light) and consequently causing stray light and ghosting. The optical module has the second polarization unit 31 added to the side close to the human eye. The second polarization unit 31 transmits all light parallel to the third polarization transmission direction, and reflects all light perpendicular to the third polarization transmission direction. In this way, 50% of external stray light is first blocked, that is, all light perpendicular to the third polarization transmission direction is reflected. In addition, although 50% of the external stray light, which is parallel to the third polarization transmission direction, is fully transmitted, its energy is much lower than that of the image light emitted by the image display unit 1, such that the external stray light is fully masked. In this way, issues such as stray light and ghosting do not occur in an image, and issues such as halo, glare, eye fatigue, and discomfort caused by interference and light pollution resulting from cheek reflection can be avoided without affecting a user's perception and cognition of a virtual image, thereby improving user experience and comfort. In addition, by folding an optical path multiple times (three reflections) in the optical module, a field of view is expanded, and implementation of lightening and thinning is facilitated.

In an embodiment, the first polarization unit 21 includes a first linear polarizer 211, a polarizing reflector plate 212, and a quarter-wave plate 213 that are successively arranged along a direction from the second prism to the first prism.

The first linear polarizer 211 has a function of screening a polarization direction of light, and mainly allows only light in a specific direction to pass through according to a polarization state of the light, and blocks light in another direction. For example, in this embodiment, only -45° linearly polarized light is allowed to pass through, while 45° linearly polarized light is not.

The polarizing reflector plate 212 has a capability of selectively reflecting or transmitting light in a specific polarization direction. The polarizing reflector plate 212 is fabricated by alternately stacking multiple layers of material to implement polarization reflection characteristics thereof. In actual applications, reflectivity of the polarizing reflector plate 212 for different polarization states may be controlled by adjusting thicknesses and compositions of film layers, thereby enabling precise control of light.

The quarter-wave plate 213 is configured to change a polarization state of polarized light. It mainly converts linearly polarized light into circularly polarized light, or converts circularly polarized light into linearly polarized light. A quarter-wave plate is generally used in combination with another polarization element (such as a linear polarizer or a polarizing reflector plate), thus enabling complex optical control and adjustment.

In an embodiment, the image display unit 1 is further provided with a third polarization unit 11, and the third polarization unit 11 is configured to convert the image light into 45° linearly polarized light. The third polarization unit 11 is located on a light-emitting side of the image display unit 1, may be attached to the image display unit 1, and is configured to convert the image light into 45° linearly polarized light, so that the first polarization unit 21 can reflect the image light.

In an embodiment, the second polarization unit 31 includes a second linear polarizer, and the third polarization unit 11 includes a third linear polarizer. By using the second linear polarizer, the second polarization unit 31 transmits the light parallel to the third polarization transmission direction and reflects the light perpendicular to the third polarization transmission direction. By using the third linear polarizer, the third polarization unit 11 implements image light conversion. For example, the third linear polarizer is a 45° linear polarizer, and emits 45° linearly polarized light.

In an embodiment, the 45° linearly polarized light undergoes a first reflection on a side of the first prism close to the second reflection unit 4 to form first light, the first light undergoes a second reflection on the first polarization unit 21 to form second light, the second light undergoes a third reflection on the transflective film to form third light, the third light is converted by the first polarization unit 21 into fourth light and subsequently transmitted through the second polarization unit 31 to enter the human eye 6, the first light is 45° linearly polarized light, the second light is left-handed circularly polarized light, the third light is right-handed circularly polarized light, the fourth light is -45° linearly polarized light, and the second polarization unit 31 is configured to transmit the -45° linearly polarized light and reflect the 45° linearly polarized light. It is easily understood that a type and a direction of specific light may be further adjusted according to an actual requirement to meet actual use.

In an embodiment, the second reflection unit 4 is a curved lens, and one side thereof close to the first prism is a planar surface, and one side thereof away from the first prism is a convex surface. The curved lens is a lens that has functions of aberration correction and optical path reflection. The lens may be made of a glass material or a plastic material. It is easily understood that a quantity of lenses and a lens surface profile of the second reflection unit 4 may be further adjusted according to an actual requirement.

In an embodiment, the image display unit 1 moves relative to the first reflection unit 2 to perform diopter adjustment. Diopter adjustment in the range of 0D to 6D can be achieved.

In an embodiment, the optical module capable of eliminating stray light further includes a first imaging lens unit 5, where the first imaging lens unit 5 is located on a light-emitting side of the image display unit 1 and includes at least one lens. A focal length of the first imaging lens unit 5 is preferably 5 mm to 50 mm, which helps improve imaging quality. Because the first imaging lens unit 5 with a positive focal length is added, and image light is constrained and converged before entering the first reflection unit 2, an included angle and an amount of movement required in diopter adjustment are both less than those in a solution in which only the image display unit 1 is moved.

In an embodiment, the first imaging lens unit 5 and the image display unit 1 move synchronously relative to the first reflection unit 2 to perform diopter adjustment. Specifically, to achieve integrity and excellent imaging quality of a final picture, it is possible to make a direction in which the first imaging lens unit 5 and the image display unit 1 move synchronously forms a specific included angle with an optical axis direction of the image display unit 1. To be specific, during movement, a movement component is parallel to a light-emitting surface of the image display unit 1, so as to ensure that image light emitted by the image display unit 1 in an entire movement range can normally enter the first reflection unit 2 for light transmission, and ensure that a final imaging picture is complete within a diopter adjustment range and the entire light-emitting surface of the image display unit 1 can be fully used to implement diopter adjustment from 0D to 6D.

In addition, the image display unit 1 and the first imaging lens unit 5 move synchronously. Such a movement manner can ensure that, during movement, angles at which light emitted from a same position of the image display unit 1 is transmitted through the first imaging lens unit 5 are consistent. To be specific, for different diopters, degrees of divergence of light emitted by the first imaging lens unit 5 remain consistent, thereby ensuring that a final imaging FOV remains consistent and is not substantially reduced.

### Working principle:

The image display unit 1 emits image light, which is converted by the third polarization unit 11 into 45° linearly polarized light (a polarization transmission direction is perpendicular to a paper plane and directed inward). After being transmitted through the first imaging lens unit 5, the 45° linearly polarized light undergoes a first reflection on a side of the first prism close to the second reflection unit 4. After the first reflection, the 45° linearly polarized light undergoes a second reflection on the first polarization unit 21 to form left-handed circularly polarized light. The left-handed circularly polarized light undergoes a third reflection on the transflective film to form right-handed circularly polarized light. The right-handed circularly polarized light is further converted by the first polarization unit 21 into -45° linearly polarized light under effect of the quarter-wave plate 213, and then transmitted through the second polarization unit 31 to enter the human eye 6. The first polarization unit 21 is configured to transmit the -45° linearly polarized light and reflect the 45° linearly polarized light, and implement direct conversion between linearly polarized light and circularly polarized light. In addition, a polarization state of circularly polarized light may be converted in combination with an evaporated transflective film.

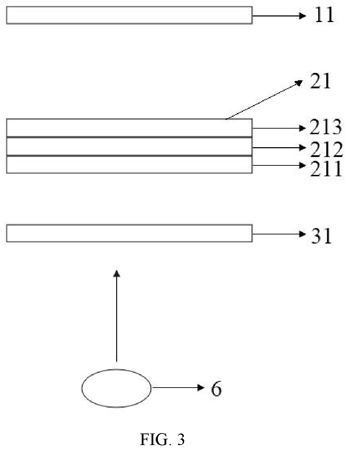

The second polarization unit 31 is configured to transmit the -45° linearly polarized light and reflect the 45° linearly polarized light, so that light used for imaging can be effectively incident on the human eye 6. Moreover, due to light selectivity of the second polarization unit 31, 50% of external stray light can be directly filtered out, and the remaining 50% of external stray light can be coupled to a part with strongest energy in the imaging system, that is, the image light emitted by the image display unit 1, so that the external stray light is fully masked with little impact on user experience. As shown in FIG. 3, a composition of each polarization unit is illustrated. The illustration is provided only for ease of understanding, and relative positions of the polarization units are not strictly arranged in accordance with their actual corresponding configuration.

### Embodiment 2:

A near-eye display device includes the optical module capable of eliminating stray light according to any embodiment according to Embodiment 1, as shown in FIG. 1 to FIG. 3. The near-eye display device may be any AR device or the like that uses the foregoing optical module capable of eliminating stray light. In this way, issues such as halo, glare, eye fatigue, and discomfort caused by stray light and ghosting resulting from cheek reflection can be avoided without affecting a user's perception and cognition of a virtual image, thereby improving user experience and comfort. In addition, the optical module formed employs an optical path folded multiple times (three reflections), thereby helping expand a field of view, and facilitating implementation of lightening and thinning.

The technical features of the foregoing embodiments may be combined arbitrarily. For brevity of description, not all possible combinations of the technical features of the foregoing embodiments are described. However, the combinations of these technical features should be considered as falling within the scope of this specification provided that there is no contradiction between the combinations.

The foregoing embodiments are merely some specific and detailed embodiments of this application, and description of these embodiments should not be understood as a limitation on the scope of this application. It should be noted that a person of ordinary skill in the art can make any variations and improvements without departing from the concept of this application, and these variations and improvements shall fall within the protection scope of this application. Therefore, the protection scope of this application shall be subject to the appended claims.

## Claims

1. An optical module capable of eliminating stray light, comprising an image display unit, a first reflection unit, a first polarization unit, a second reflection unit, and a first imaging prism unit, wherein:
the image display unit is configured to emit image light;
the first reflection unit comprises a first prism and is configured to reflect the image light to the first polarization unit;
the first polarization unit is located between the first prism and the first imaging prism unit, and is configured to reflect image light in a first polarization transmission direction to the second reflection unit and transmit image light in a second polarization transmission direction, wherein the first polarization transmission direction is 90° to the second polarization transmission direction, and the first polarization transmission direction is the same as a polarization transmission direction of the image display unit;
the second reflection unit comprises at least one lens, and a transflective film is provided on a side of the lens away from the first prism, wherein the transflective film is configured to reflect the image light in the first polarization transmission direction so that the reflected image light passes through the first reflection unit and the first imaging prism unit successively to enter a human eye, and the transflective film is configured to transmit light from a real scene, so that the light from the real scene passes through the first reflection unit and the first imaging prism unit successively to enter the human eye; and
the first imaging prism unit comprises a second prism and a second polarization unit, wherein the second polarization unit is attached to the second prism and arranged close to the human eye, and is configured to transmit light parallel to a third polarization transmission direction and reflect light perpendicular to the third polarization transmission direction; and the third polarization transmission direction is the same as the second polarization transmission direction.

2. The optical module capable of eliminating stray light according to claim 1, wherein the first polarization unit comprises a first linear polarizer, a polarizing reflector plate, and a quarter-wave plate that are successively arranged along a direction from the second prism to the first prism.

3. The optical module capable of eliminating stray light according to claim 2, wherein the image display unit is further provided with a third polarization unit, and the third polarization unit is configured to convert the image light into 45° linearly polarized light.

4. The optical module capable of eliminating stray light according to claim 3, wherein the second polarization unit comprises a second linear polarizer, and the third polarization unit comprises a third linear polarizer.

5. The optical module capable of eliminating stray light according to claim 3, wherein the 45° linearly polarized light undergoes a first reflection on a side of the first prism close to the second reflection unit to form first light, the first light undergoes a second reflection on the first polarization unit to form second light, the second light undergoes a third reflection on the transflective film to form third light, the third light is converted by the first polarization unit into fourth light and subsequently transmitted through the second polarization unit to enter the human eye, the first light is 45° linearly polarized light, the second light is left-handed circularly polarized light, the third light is right-handed circularly polarized light, the fourth light is -45° linearly polarized light, and the second polarization unit is configured to transmit the -45° linearly polarized light and reflect the 45° linearly polarized light.

6. The optical module capable of eliminating stray light according to claim 1, wherein the second reflection unit is a curved lens, and one side of the curved lens close to the first prism is a planar surface, and one side of the curved lens away from the first prism is a convex surface.

7. The optical module capable of eliminating stray light according to claim 1, wherein the image display unit is able to move relative to the first reflection unit to perform diopter adjustment.

8. The optical module capable of eliminating stray light according to claim 1, further comprising a first imaging lens unit, wherein the first imaging lens unit is located on a light-emitting side of the image display unit and comprises at least one lens.

9. The optical module capable of eliminating stray light according to claim 8, wherein the first imaging lens unit and the image display unit are able to move synchronously relative to the first reflection unit to perform diopter adjustment.

10. A near-eye display device, comprising the optical module capable of eliminating stray light according to any one of claims 1 to 9.
